# EUROPEAN PATENT APPLICATION

(11) **EP 4 834 077 A1**
(43) Date of publication of application: **04.11.2026**
(21) Application number: 26170432.4
(22) Date of filing: 02.04.2026
(51) Int. Cl.: A01C 7/20, A01C 5/06

(54) **FURROW-CUTTING SYSTEM FOR A SEED OR FERTILIZER DELIVERY SYSTEM**

(30) Priority: 28.04.2025 GB 202506421
(71) Applicant: Agco Do Brasil Soluções Agrícolas Ltda, São Paulo, 13213-105 (BR)
(72) Inventor: Matter, Jarlis Luiz, 98200-000 Ibiruba (BR); Damo Cunha, Venicius, Não Me Toque (BR)
(74) Representative: AGCO Intellectual Property Department

(57) **Abstract**

A furrow-cutting system is provided for a seed or fertilizer delivery system. A furrowing-cutting disc (400) is for cutting a furrow into a field. It is mounted by a first suspension system (410) which enables the furrow-cutting disc to move in position relative to a frame (212) of the furrow-cutting system by a first amount of travel. A bracket (600) is used to mount the frame to a main chassis of the seed or fertilizer delivery system. The bracket has a second suspension system (630) which enables the frame to move in position relative to the main chassis by a second amount of travel. Thus, the furrow-cutting disc is supported by an overall suspension system which combines the first and second amounts of travel.

## Description

### FIELD

Embodiments of the present disclosure relate generally to seed or fertilizer delivery systems, and in particular this disclosure relates to the furrow-cutting system used in seed or fertilizer delivery systems.

### BACKGROUND

Seed and/or fertilizer delivery systems are commonly towed by tractors to apply seed or fertilizer, or both simultaneously, to a field. An air seeder or planter is for example used in combination with a tilling implement, both towed behind a tractor, to place seed and fertilizer into a furrow which is opened by the tilling implement. Air seeders and planters comprise one or more product tanks for holding product, generally seed or fertilizer or both. Air seeders and planters also typically include a dosing system for dispensing product from the tanks and a pneumatic distribution system for delivering the product from the tanks to the soil.

Seed delivery systems generally include a furrow-cutting disc to open a furrow, an application system for applying seed and/or fertilizer and a closing system for closing the furrow. The overall system is usually articulated with springs to provide a downforce. A suspension system for example enables relative movement between a furrow-cutting disc and a frame of the seed delivery system, so that seed delivery system can follow the contour of the ground.

A seed and/or fertilizer delivery system is for example provided in each row unit of a set of row units, and the suspension systems enable the row units to follow the contour of the field independently.

The maximum amount of relative movement (*i.e.,* travel) of the suspension system is a design feature of the system. However, if the contour of the field means that the travel ends, damage may be caused to the fixing brackets, and loosening or breakage of the fixing backets can result.

If a seed and/or fertilizer delivery system is designed with a particular maximum travel, it may not be suitable for some applications. It would be of interest to be able to extend the range of applications for existing seed and/or fertilizer delivery systems.

### BRIEF SUMMARY

According to examples in accordance with this disclosure, there is provided a furrow-cutting system for a seed or fertilizer delivery system. A furrowing-cutting disc is used for cutting a furrow into a field. A first suspension system enables the furrow-cutting disc to move in position relative to a frame of the furrow-cutting system by a first amount of travel. A bracket is provided for mounting the frame to a main chassis of the seed or fertilizer delivery system. The bracket comprises a second suspension system which enables the frame to move in position relative to the main chassis by a second amount of travel.

It is noted that the furrow-cutting disc rotates about a central axis. However, such rotation does not change the "position" of the furrow-cutting disc, based on the meaning of "position" as used in this disclosure. The first suspension system allows relative movement between the furrow-cutting disc and frame of the furrow-cutting system. so that the furrow-cutting disc can rise and fall to follow the contour of the field. The second spring arrangement allows further movement of the furrow-cutting disc relative to the main chassis, so that if the limit of travel of the first suspension arrangement is reached, the furrow-cutting system can move further. Movement of the furrow-cutting disc is thus possible up to the combination of the first and second amounts of travel. This for example enables the furrow cutting system to pass over larger obstacles without damaging components of the system.

The furrow-cutting system may further comprise a gauge wheel having a base positioned above a base of the furrow-cutting cutting disc to define a furrow depth. The gauge wheel rides over the cut furrow and thus tracks the surface of the field, and the furrow-cutting disc penetrates the soil to a preset depth beneath the gauge wheel.

The bracket for example comprises a first mounting unit for mounting the bracket to the main chassis and a second mounting unit for connection to the frame of the furrow-cutting system. The first and second mounting units may be pivotally connected together and the second suspension system comprises a spring that is compressed by pivoting of the first and second mounting units relatively to each other. This spring is thus compressed when the furrow-cutting disc is lifted beyond the first amount of travel.

The first mounting unit for example is for mounting the bracket to a tool bar of a row unit.

This disclosure also provides a row unit for a seed or fertilizer delivery system, comprising the furrow-cutting system as described above and a seed or fertilizer delivery unit for delivering seed or fertilizer to the furrow.

This disclosure also provides a seed or fertilizer delivery system comprising a plurality of row units, each as described above.

This disclosure also provides a bracket for mounting a furrow-cutting system to a main chassis of a seed or fertilizer delivery system. The bracket has a first mounting unit for mounting the bracket to the main chassis and a second mounting unit for connection to a frame of the furrow-cutting system, wherein the first and second mounting units are pivotally connected together. A suspension system enables the frame to move in position relative to the main chassis. In this way, suspension of the furrow-cutting system may be combined with the suspension system of the bracket to give an increased amount of travel in the overall suspension of the furrow-cutting disc.

The suspension system of the bracket for example comprises a spring that is compressed by pivoting of the first and second mounting units relatively to each other.

### BRIEF DESCRIPTION OF THE DRAWINGS

Embodiments will now be described, by way of example only, with reference to the accompanying drawings, in which:
FIG. 1 shows a known seed delivery system being towed behind a tractor;
FIG. 2 shows a row unit with a seed tank;
FIG. 3 shows a first example of a known furrow-cutting system;
FIG. 4 shows a second example of a known furrow-cutting system;
FIG. 5 shows the furrow-cutting system of FIG. 4 with a rigid mounting bracket;
FIG. 6 shows a mounting bracket in accordance with this disclosure, in side view;
FIG. 7 shows the mounting bracket of FIG. 6 in perspective view;
FIG. 8 shows the furrow-cutting system of FIG. 4 connected to the mounting bracket of FIG. 6; and
FIG. 9 shows the furrow-cutting system of FIG. 4 connected to the mounting bracket of FIG. 6 from the opposite side to FIG. 8.

### DETAILED DESCRIPTION

The detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the figures are merely schematic and are not drawn to scale. It should also be understood that the same reference numerals are used throughout the figures to indicate the same or similar parts.

This disclosure relates to a furrow-cutting system for a seed or fertilizer delivery system. A furrowing-cutting disc is for cutting a furrow into a field. It is mounted by a first suspension system which enables the furrow-cutting disc to move in position relative to a frame of the furrow-cutting system by a first amount of travel. A bracket is used to mount the frame to a main chassis of the seed or fertilizer delivery system. The bracket has a second suspension system which enables the frame to move in position relative to the main chassis by a second amount of travel. Thus, the furrow-cutting disc is supported by an overall suspension system which combines the first and second amounts of travel.

There are many different types of seed delivery system. For large scale agriculture, the system is towed behind a tractor and comprises a wide frame, defining a set of rows. Each row has a row unit carried by the frame where the delivery of seeds and/or fertilizer into the ground takes place. In pneumatic systems, air flow is used to deliver seeds from a seed tank to the row units.

Some seed delivery systems volumetrically meter the seeds at the location of the seed tank, and then deliver the metered seeds to the row unit. The row unit may then simply comprise a seed boot. This arrangement is generally known as an air seeder.

Other seed delivery systems perform initial dosage of the seeds using a distribution unit at the location of the seed tank, and the row units have a receiving chamber which fills up and the row units create a flow of singulated seeds. When the receiving chamber is full, the air flow is interrupted, stopping flow of material into the receiving chamber. At the row unit, the seeds are singulated and delivered to the ground by a seed metering unit. This for example involves a cutting disc comprising seed cells into which individual seeds are received, and the disc is rotated (*e.g*., by an electric drive) to deliver seeds one at a time from the receiving chamber. The row unit has a vacuum pump to deliver a vacuum pressure to hold the seeds in the seed cells, and the vacuum is released when the disc rotates to allow the seeds to drop one at a time from the cutting disc into a furrow. This arrangement is generally known as a planter.

In this disclosure, the term "planter" will be used, from this point on, to denote any type of seed and/or fertilizer delivery system.

Most planters open a furrow into which the seeds are dropped. For this purpose, a trench opener (or furrow opener) is at the front of the row unit (in the direction of travel) before the seed discharge system, and a closing wheel (or pair of wheels) is at the back of the unit to close the furrow.

When planting out a field, there may be cut straw which has been left on the field (from the previous harvest). It may be used to help retain moisture in the soil to keep newly planted seeds from drying out. A layer of straw can also help to prevent weeds from germinating, and can protect seeds from extreme temperatures.

When cutting and filling a furrow using a planter it is necessary to ensure that the furrow is re-filled with soil rather than straw that may be present. For this purpose, a planter may include a straw cutting disc that is used to cut straw and move it away from the cut furrow so that the furrow is closed with soil.

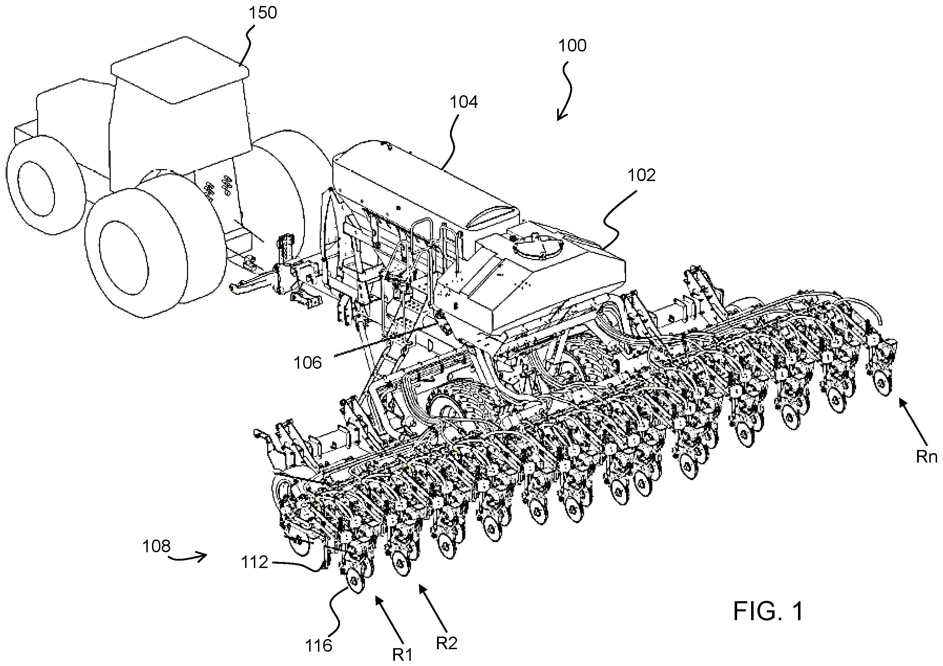

FIG. 1 shows a known planter 100 being towed behind a tractor 150.

In this example, the planter comprises a first tank 102 for seeds and a second tank 104 for dry fertilizer. Each tank has its own air pump, for example the air pump for the first tank 102 is shown at 106. The air pumps each deliver material from their respective tank to the delivery head 108 which comprises a series of row units R1, R2 ,..., Rn. The air pump generates a flow of air, and seeds are introduced into the airflow at a venturi. The air flows, with entrained seeds and dry fertilizer, are conveyed to the row units by pipe connections.

Each row unit is designed to open a furrow, deliver individual seeds into the furrow, and deliver fertilizer to or near the furrow. In some designs, the delivery head may also close the furrow. Each row unit comprises a trench opener 116 and inside it there is a seed tube (seed boot) for delivering the seed. A fertilizer delivery nozzle 112 (shank) is also provided. Each row unit has a set of sensors for monitoring the functioning of the row unit.

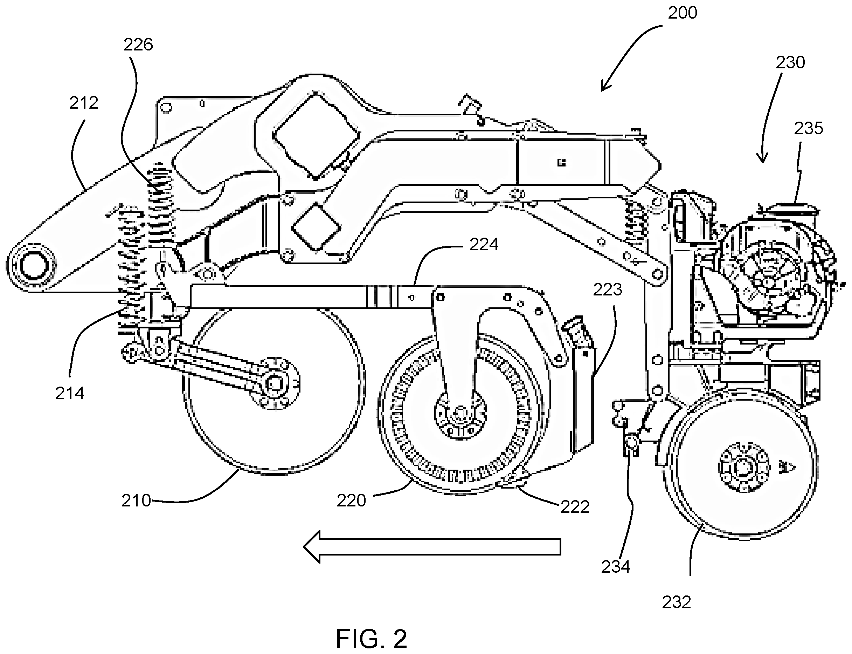

FIG. 2 shows an example of a single row unit of a planter which incorporates a straw cutting wheel. The row unit 200 comprises a furrow-cutting disc 210 which is mounted to a main frame 212 of the row unit by a first suspension system having a spring 214. The furrow-cutting disc opens the furrow.

A straw-cutting disc 220 cuts straw lying on the field and disperses it away from the open furrow. At the back side of the straw-cutting disc (relative to the direction of travel as shown by the arrow), there is a claw 222 which is used to clean the straw-cutting disc and laterally push the cut straw to the sides.

The straw-cutting disc 220 has a ring of ridges on each side. These facilitate rotation of the disc by increasing lateral friction within the furrow opened by the furrow-cutting disc 210.

The straw-cutting disc 220 in this embodiment is mounted at the end of a longitudinal bar 224 which is mounted to the main frame 212 by a second suspension system having a spring 226.. However, the straw-cutting disc 220 may be mounted at other locations and by other means known in the art.

The spring 214 of the first suspension system transfers a load to the furrow-cutting disc 210. The straw cutting disc 220 runs inside the groove made by the furrow-cutting disc 210. It is used to cut straw that returns to the groove. A fertilizer delivery tube 223 is mounted on the rear of the straw-cutting disc 220. It for example applies fertilizer to a depth of around 12 cm. The spring 226 of the second suspension system transfers a load to the straw cutting disc 220. The two suspension systems operate independently.

A seed delivery unit 230 comprises a third disc 232 and a seed meter 235.

The seed is delivered upstream of the third disc 232. For example, a seed drop tube 234 is shown ahead of the third disc. The third disc 232 is for example arranged as a pair of discs in a V-shaped configuration. The double V disc opens the furrow again (because the soil typically closes the furrow after the discs 210 and 220 have passed) and deposits the seeds dosed by the seed meter 235.

This disclosure relates in particular to the furrow-cutting disc 210 and mounting the furrow-cutting disc 210 to the main frame 212.

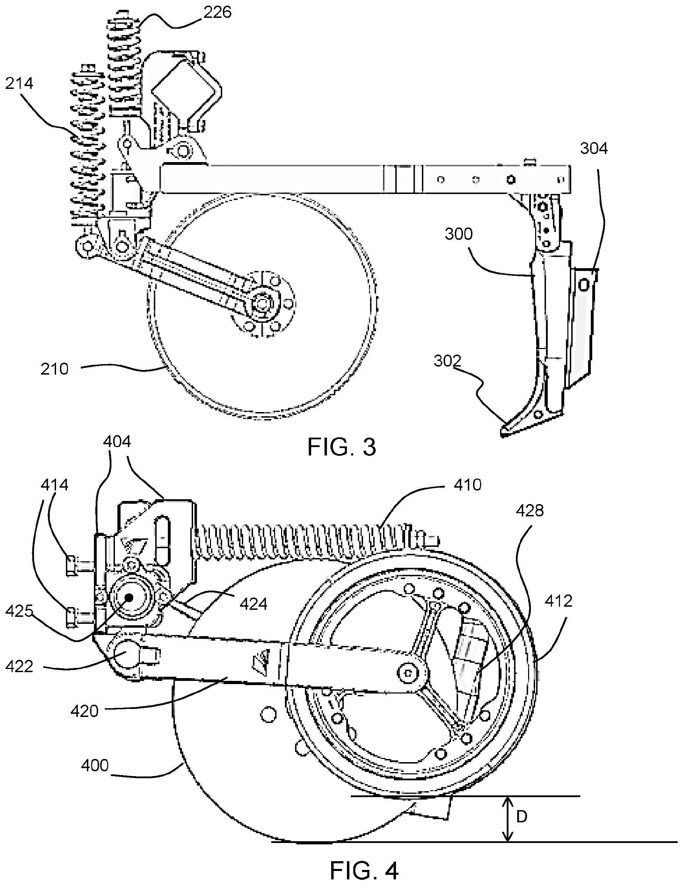

FIG. 3 shows a first example of a furrow-cutting disc arrangement including the furrow-cutting disc 210. There is an additional shank 300. A claw 302 at the end of the shank 300 has the function of deepening the furrow to deposit fertilizer as well as providing a replaceable wear element. Fertilizer is delivered by duct 304.

FIG. 4 shows a second example of a furrow-cutting disc arrangement. This arrangement has a furrow-cutting disc 400 and a wide gauge wheel 402 (*e.g.,* 5 cm wide) that rides over the cut furrow. The depth D of the furrow is set by the fixed height difference between the furrow-cutting disc 400 and the gauge wheel 402.

There is again a suspension system comprising a spring 410. This spring 410 allows the combined unit of the furrow-cutting disc 400 and gauge wheel 402 to lift relative to a static frame 404. In particular, the gauge wheel 412 is mounted on an arm 420 that is pivotally connected to the frame 414 at the pivot point 422. The furrow-cutting disc 400 is also mounted on an arm 424. The two arms 420, 424 can pivot upwardly, but against the bias of the spring 410, and the spring allows a maximum amount of movement (*i.e.,* travel) of the furrow-cutting disc 400 and gauge wheel 412.

The furrow-cutting disc 400 and the gauge wheel 412 are locked together once the depth D is adjusted. They rotate about the pivot axis 425. The spring 410 remains horizontal during the rotation of the arm 424, furrow-cutting disc 400 and the gauge wheel 412. Fertilizer is delivered via a delivery tube 428.

The furrow-cutting disc arrangement is fixed to a main chassis of the row unit by bolts 414.

In both designs, the suspension system allows the furrow-cutting disc to ride over obstacles, independently of the furrow cutting discs in the other row units, and thereby enables the system to tolerate uneven ground. The suspension system provides a downforce and has a maximum amount of travel.

A seed or fertilizer application system, including the furrow-cutting disc and suspension system, may be purchased as an off-the-shelf unit, and then incorporated into a planter design. Such off-the-shelf units will be designed with a certain amount of travel, but it may be desired to enable a larger amount of travel. In particular, if the suspension system reaches its limit of travel in use, there may be damage to, or loosening of, fixing brackets or the row unit.

This disclosure relates to an improvement that enables existing designs of the furrow-opening disc and suspension system to be used, but enabling an increased amount of travel. For example, the ALR00100 fertilizer application system, available from Aulari Industrie Inc, of Quebec, Canada, has a maximum travel of 138 mm.

An example will now be shown of a system that enables the travel of the system of FIG. 4 to be increased, for example to 188 mm. However, the same approach may be applied to the system of FIG. 3.

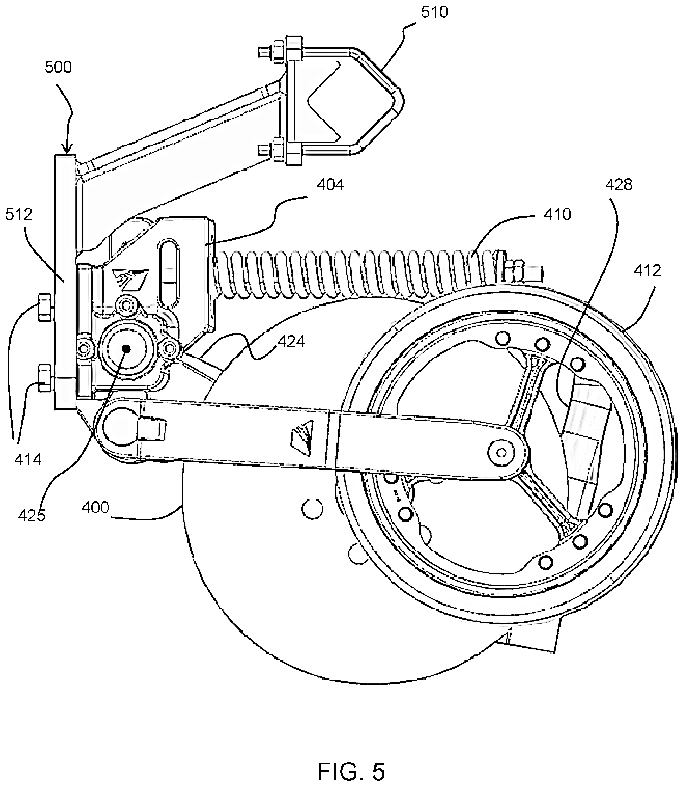

FIG. 5 shows the furrow-cutting disc arrangement of FIG. 4 with the frame 404 bolted to a rigid bracket 500 by the bolts 414.

The rigid bracket 500 has a first mounting 510 unit for mounting the bracket to the main chassis and a second mounting unit 512 for connection to the frame 404 of the furrow-cutting system.

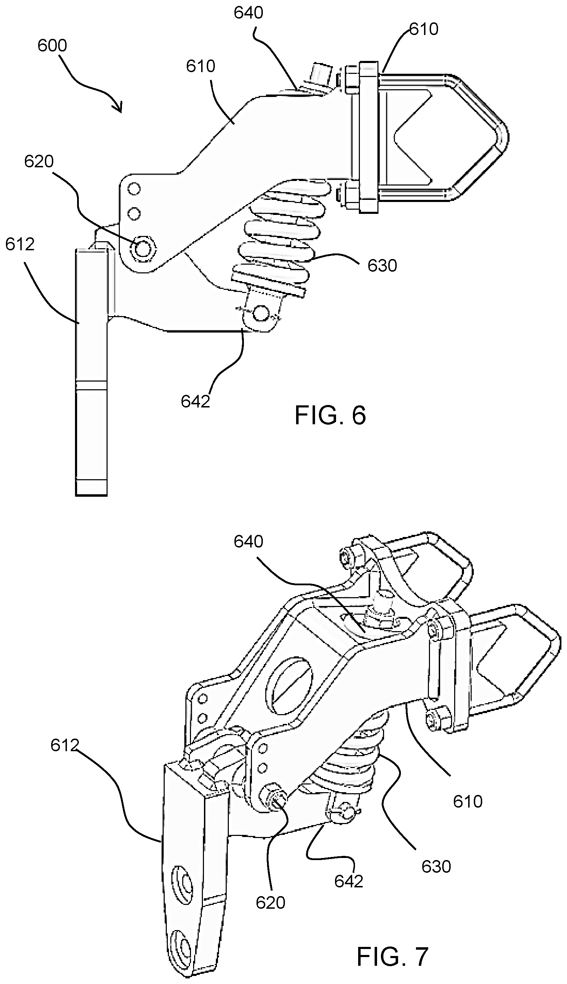

FIG. 6 shows a bracket 600 of this disclosure. The bracket again has a first mounting unit 610 for mounting the bracket to the main chassis, such as to a toolbar of the planter, and a second mounting unit 612 for connection to the frame 404 of the furrow-cutting system. The first and second mounting units 610, 612 are pivotally connected together at pivot connection 620.

A spring 630 is compressed by pivoting of the first and second mounting units 610, 612 relatively to each other. The spring 630 in this way defines a (second) suspension system that is integrated into the bracket.

The first mounting unit 610 defines a first seat 640 to which one end of the spring 630 is connected and the second mounting unit 612 defines a second seat 642 to which the other end of the spring is connected. When the furrow-cutting disc is raised by the limit of travel of the (first) suspension system of the furrow cutting disc arrangement, the (second) suspension system of the bracket is then employed. The spring 630 is compressed by the further movement of the furrow-cutting disc and it has its own travel limit.

FIG. 7 shows the bracket in perspective view. It shows that the first and second mounting units each comprise a pair of spaced plates, and the pivot connection between them comprises a pivot shaft that extends through the four plates to provide a stable load-bearing coupling.

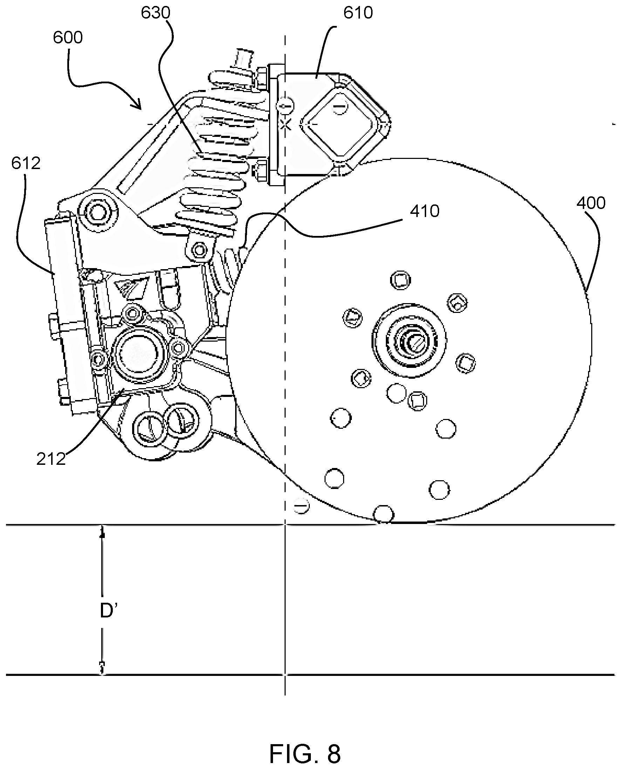

FIG. 8 shows the bracket 600 bolted to the furrow-opening disc arrangement of FIG. 4 (instead of bolted to the rigid bracket of FIG. 5). The gauge wheel is omitted for clarity. The maximum travel, when both suspension arrangements are at their travel limit as shown, is increased to D', *e.g.,* to 188 mm.

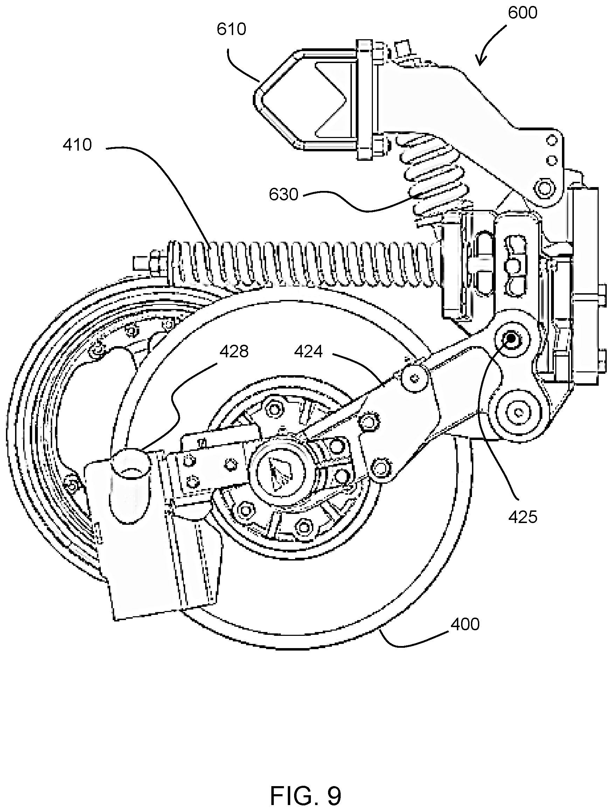

FIG. 9 shows the bracket bolted to the furrow-opening disc arrangement of FIG. 4 from the other side. The arm 424 in which the furrow-cutting disc is mounted, as well as the fertilizer delivery tube 428, are more clearly visible.

The example above shows a planter with a single central seed tank. There may instead or in addition be individual seed tanks at the row units. In this way, the seed storage may be distributed between the row units. This gives improved weight distribution, and enables variable rate seeding at the different rows as well as greater flexibility for different seeds.

The bracket may be applied to any design of furrow-opening disc which includes its own suspension system, such that the travel of that suspension system may be increased. In this way, the furrow-cutting system can be used with a wider range of terrains.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

Any reference signs in the claims should not be construed as limiting the scope.

All references cited herein are incorporated herein in their entireties. If there is a conflict between definitions herein and in an incorporated reference, the definition herein shall control.

## Claims

1. A furrow-cutting system for a seed or fertilizer delivery system, comprising:
a frame (212);
a furrowing-cutting disc (400) for cutting a furrow into a field;
a first suspension system (410) which enables the furrow-cutting disc (400) to move in position relative to the frame (212) by a first amount of travel, wherein the furrow-cutting disc (400) is rotatably mounted to the first suspension system; and
a bracket (600) for mounting the frame to a main chassis of the seed or fertilizer delivery system,
wherein the bracket (600) comprises a second suspension system (630) which enables the frame (212) to move in position relative to the main chassis by a second amount of travel.

2. The furrow-cutting system of claim 1, wherein the furrow-cutting system further comprises a gauge wheel (412) having a base positioned above a base of the furrow-cutting cutting disc (400) to define a furrow depth.

3. The furrow-cutting system of claim 1 or 2, wherein the bracket (600) comprises:
a first mounting unit (610) for mounting the bracket (600) to the main chassis; and
a second mounting (612) unit for connection to the frame (212) of the furrow-cutting system, wherein the first and second mounting units (610, 612) are pivotally connected together,
wherein the second suspension system comprises a spring (630) that is compressed by pivoting of the first and second mounting units (610, 612) relatively to each other.

4. The furrow-cutting system of claim 3, wherein the first mounting unit (610) is for mounting the bracket to a tool bar of a row unit.

5. A row unit for a seed or fertilizer delivery system, comprising:
the furrow-cutting system of any one of claims 1 to 4; and
a seed or fertilizer delivery unit for delivering seed or fertilizer to the furrow.

6. A seed or fertilizer delivery system comprising:
a plurality of row units, each as claimed in claim 5.

7. A bracket (600) for mounting a furrow-cutting system to a main chassis of a seed or fertilizer delivery system, comprising:
a first mounting unit (610) for mounting the bracket (600) to the main chassis;
a second mounting unit (612) for connection to a frame of the furrow-cutting system, wherein the first and second mounting units (610, 612) are pivotally connected together; and
a suspension system (630) which enables the frame to move in position relative to the main chassis.

8. The bracket of claim 7, wherein the suspension system comprises a spring (630) that is compressed by pivoting of the first and second mounting units (610, 612) relatively to each other.
